# NOUVEAU FASCICULE DE BREVET EUROPEEN

(11) **EP 0 451 023 B2**
(45) Date de publication et mention de la décision concernant l'opposition: **04.02.1998**
(45) Mention de la délivrance du brevet: 05.01.1994
(21) Numéro de dépôt: 91400828.9
(22) Date de dépôt: 27.03.1991
(51) Int. Cl.: B62D 65/00, B60R 13/06, B23P 19/04

(54) **Procédé et dispositif pour la mise en place d'un profilé à section en U sur un rebord d'un encadrement d'une carrosserie d'automobile**
Verfahren und Vorrichtung zum Anbringen eines Profils mit U-förmigem Querschnitt auf den Rand eines Rahmenteils einer Autokarosserie
Method and device for placing a profile with U cross section on an edge of a framing of an automotive body

(30) Priorité: 05.04.1990 FR 9004357; 05.07.1990 FR 9008547
(43) Date de publication de la demande: 09.10.1991
(73) Titulaire: BTR SEALING SYSTEMS FRANCE, 92000 Nanterre (FR)
(72) Inventeur: Mesnel, Gérard, F-78420 Carrieres-sur-Seine (FR); Mesnel, François, F-92200 Neuilly-sur-Seine (FR)
(74) Mandataire: Jolly, Jean-Pierre

(56) Documents cités:
- EP-A- 212 070
- EP-A- 0 253 599
- DE-A- 2 944 055
- FR-A- 2 557 825
- FR-A- 2 626 054
- US-A- 4 620 354

## Description

La présente invention concerne un procédé et un dispositif pour la mise en place d'un profilé à section en U sur un rebord d'un encadrement d'une carrosserie d'automobile ou similaire. L'invention concerne plus particulièrement la mise en place, sur des encadrements de portes d'automobiles ou sur des bords d'ouvertures de coffres d'automobiles, de joints d'étanchéité comprenant un tel profilé formant pince, en matière plastique armée, et un élément d'étanchéité attenant à ce profilé.

On sait que de tels joints comprennent habituellement un profilé à section en U, comprenant une armature métallique, gainée d'une matière souple telle que du caoutchouc ou une matière plastique, ce profilé étant destiné à être fixé par pincement sur un bord saillant ou une partie saillante d'une carrosserie d'automobile. Ce profilé est associé à un élément d'étanchéité souple, tubulaire par exemple, destiné à être comprimé entre deux parties de la carrosserie, une portière et son encadrement par exemple.

On a décrit, dans la technique, de nombreuses variantes de tels profilés, mais, du fait que l'armature métallique de ces profilés est déformable et que la matière de revêtement peut se contracter après mise en place du profilé sur l'élément de carrosserie associé, même lorsqu'on utilise un profilé en forme d'anneau dont les extrémités sont rendues solidaires l'une de l'autre, on emploie habituellement un profilé dont la longueur est supérieure à celle de l'élément de carrosserie à équiper et on le met en position en le comprimant légèrement sur cet élément. Dans ce but, on commence par fixer manuellement le profilé en anneau, à l'aide d'un maillet à tête souple, en différents points de l'élément de la carrosserie, entre lesquels il forme des boucles (montage dit "en boucles" ou "en festons"). On met ensuite le profilé en place sur le reste de l'élément de carrosserie, en appliquant des coups de maillet de façon continue entre les points initiaux de fixation, pour amener le profilé à pincer l'élément de carrosserie suivant toute sa longueur. Le profilé étant plus long à l'origine que l'élément de carrosserie de quelques dizaines de millimètres (généralement 30 à 35 mm), l'excès de matière plastique ou de caoutchouc formant la pince est ainsi forcé en position par compression.

Le tassement longitudinal d'environ 10 à 15% de l'élément d'étanchéité attenant au profilé formant pince, lequel est généralement en une matière cellulaire, le rend plus dur à déformer que s'il n' avait pas été soumis à la contrainte de mise en place du profilé. Il en résulte alors une difficulté de fermeture des portes et des coffres d'automobiles.

Outre cet inconvénient, ce processus de mise en position des joints d'étanchéité sur les encadrements de porte ou les ouvertures de coffre utilise un excès de matière première et est coûteux en personnel, puisqu'un ouvrier qualifié met plusieurs minutes à équiper un encadrement de porte du joint associé.

EP-A-0 253 599 décrit un procédé de mise en place, sur un rebord saillant d'un encadrement d'une carrosserie d'automobile, d'un profilé à section en U en une matière résiliente, les deux extrémités du profilé étant solidaires l'une de l'autre de manière qu'il forme un anneau, procédé dans lequel on fixe initialement en position en un emplacement prédéterminé du rebord de cet encadrement, une partie prédéterminée du profilé, et dans lequel, ensuite, à l'aide d'un outil constitué parun rouleau de pression, on applique en continu contre le rebord de l'encadrement de carrosserie, à partir dudit emplacement prédéterminé, une première partie du profilé, puis une autre partie du profilé, en imprimant à l'outil un trajet continu suivant la longueur du rebord de l'encadrement de carrosserie, jusqu'à ce qu'il revienne à son point de départ.

L'invention vise à mettre à profit l'apparition sur le marché de profilés à section en U dont la structure est telle que leur longueur ne varie pratiquement pas, sous la sollicitation de retrait de la matière plastique ou au cours des opérations de montage, aussi bien au stockage, qu'après mise en place sur un élément de carrosserie, et elle propose d'utiliser, pour cette mise en place, un procédé qui n'utilise qu'une longueur de profilé sensiblement égale à celle de l'élément de carrosserie à équiper et qui puisse être mis en oeuvre à l'aide d'un appareillage automatisé n'impliquant pas l'intervention directe d'un ouvrier.

A cet effet, l'invention a pour objet un procédé de mise en place, sur un rebord saillant d'un encadrement d'une carrosserie d'automobile, d'un profilé à section en U comprenant une armature métallique sensiblement non extensible, gainée d'une matière résiliente, cette armature étant sensiblement non déformable dans le temps soins la sollicitation de la matière de revêtement, procédé selon lequel on fixe initialement en position, en un emplacement prédéterminé du rebord de cet encadrement, éventuellement repéré, une partie prédéterminée et éventuellement repérée du profilé, puis, à l'aide d'un outil, on applique en continu le profilé contre le rebord de l'encadrement de carrosserie à partir dudit emplacement prédéterminé jusqu'à une première extrémité du profilé et, toujours à partir dudit emplacement prédéterminé, jusqu'à l'autre extrémité du profilé, procédé du type décrit plus haut et divulgué, par exemple, par EP-A-0 253 599, ce procédé étant caractérisé en ce que le profilé a une longueur sensiblement égale à celle de l'encadrement de carrosserie à équiper et en ce que l'outil utilisé est un maillet vibrant à tête souple, animée d'un mouvement alternatif de percussion, fixé sur la tige d'un porte-outil vibrant.

La mise en position d'une partie prédéterminée du profilé en un emplacement prédéterminé de l'encadrement de carrosserie pourra être effectuée manuellement ou à l'aide du maillet à tête vibrante ou encore à l'aide d'un robot. Dans le cas d'un encadrement de porte, l'emplacement prédéterminé de l'élément de carrosserie sera situé de préférence dans l'angle supérieur de l'encadrement contigu au pied milieu correspondant de la carrosserie. Dans le cas d'une ouverture de coffre, l'emplacement prédéterminé de l'encadrement de carrosserie sera de préférence situé dans l'un ou l'autre des angles de l'ouverture les plus proches de la lunette arrière du véhicule.

De préférence, les extrémités du profilé seront préalablement réunies par des moyens connus dans la technique (par soudage-collage ou soudage-vulcanisation de la matière plastique et du caoutchouc, ou à l'aide d'agrafes ou autres) pour que le profilé forme un anneau, comme dans la technique antérieure du montage "en boucles" du profilé. Dans le cas d'un encadrement de porte, le point de jonction des deux extrémités sera situé à la base de l'encadrement de porte, de préférence dans la partie médiane de cette base, ou encore dans la partie de cet encadrement disposée en regard du pied-milieu. Dans le cas d'une ouverture de coffre, le point de jonction des deux extrémités du profilé sera situé sur l'arête de l'ouverture disposée à l'arrière du véhicule, de préférence dans la partie médiane de cette arête.

Dans de telles formes de mise en oeuvre de l'invention, le maillet vibrant à tête souple peut effectuer un trajet continu dans une même direction, depuis le point de fixation initial du profilé en un emplacement prédéterminé du rebord de l'encadrement de carrosserie, jusqu'à son point de départ, en effectuant un trajet continu suivant toute la longueur de l'élément de carrosserie,
le maillet à tête vibrante peut effectuer également un premier trajet depuis le point de fixation initial du profilé en un emplacement prédéterminé du rebord de l'encadrement de carrosserie jusqu'à un point quelconque de cet élément, puis revenir au point de fixation initial pour effectuer un second trajet en sens inverse du précédent jusqu'au point du profilé où il s'était arrêté précédemment.

La mise en place initiale d'une partie du profilé en un emplacement prédéterminé du rebord de l'encadrement de carrosserie pourra s'effectuer manuellement ou à l'aide du maillet à tête vibrante. Elle pourra également être réalisée par un outil différent, notamment par une pince portée par une tête d'un robot différent de celui actionnant le maillet vibrant ou par une seconde tête portée par le robot actionnant le maillet vibrant.

La tête souple du maillet vibrant pourra être conformée en U afin d'épouser la forme externe du profilé formant la pince et de faciliter sa mise en place, tout en le guidant le long de l'élément de carrosserie à équiper. Ce maillet sera simplement fixé sur la tige d'un porte-outil pneumatique vibrant d'un type connu en soi, dont la fréquence nominale de vibration est d'environ 2 000 cycles par minute, sous une presson d'air comprimé de 6 bars. Cette fréquence pourra être modifiée avantageusement en faisant varier la pression d'alimentation en air comprimé. La course du maillet vibrant est d'environ 30 mm. Le porte-outil vibrant, pneumatique ou électrique, est du type des blocs vibrants, sur lesquels sont fréquemment montées des limes ou des organes abrasifs.

Dans une forme préférée de mise en oeuvre de l'invention, le porte-outil vibrant et le maillet à tête souple solidaire de la partie mobile de celui-ci seront portés par un bras d'un robot et la mise en oeuvre du procédé pourra être entièrement automatisée à l'aide de ce robot, programmé de façon conventionnelle. Ici encore, comme robot, on pourra avantageusement utiliser les robots employés de façon usuelle dans la technique automobile et dont le bras est muni par exemple d'une pince à souder par points ou d'un pistolet à peinture, qu'il suffira de remplacer par un maillet à tête souple.

Le maillet à tête souple ou la structure portant celui-ci comportera de préférence au moins un élément de guidage du profilé, parexemple un élément de guidage à profil en U, dont les branches du U sont éventuellement réunies à leur partie supérieure par un organe amovible de fermeture tel qu'une goupille. Cet organe de fermeture pourra être actionné par un moyen de commande tel qu'un vérin. De préférence, deux éléments de guidage analogues disposés dans un même plan de part et d'autre de la tige du maillet, par exemple symétriquement par rapport à celui-ci, seront prévus afin d'assurer le guidage du profilé dans toutes les positions du maillet, un robot assurant le passage du profilé d'un élément de guidage à l'autre, ainsi que la mise en place ou le retrait des éléments de fermeture de l'élément de guidage, suivant les besoins.

On notera qu'alors que, dans la technique connue du montage en boucles du profilé, on comprimait la matière plastique et l'armature du profilé, avec le présent procédé où le profilé est mis en place en continu sur un rebord d'un encadrement d'une carrosserie à partir d'un point prédéterminé à l'aide d'un outil vibrant qui progresse le long de cet élément de carrosserie, le profilé ne subit pas de contrainte lors de sa mise en place. On peut donc utiliser un profilé dont la longueur est quasiment identique à celle de l'élément de carrosserie à équiper, avec pour conséquence une économie de matière première et une absence de compression de l'élément d'étanchéité attenant au profilé en U, ce qui facilite ultérieurement la fermeture des portes ou du coffre des véhicules. Par ailleurs, la mise en oeuvre de ce procédé à l'aide d'un robot programmé assure une meilleure homogénéité du montage et une économie appréciable de personnel.

On notera également que l'utilisation d'un maillet à tête vibrante, éventuellement actionné et commandé par un robot, permet d'employer des profilés comportant une pièce à section en U plus refermée et nécessitant donc des efforts de mise en place supérieurs à ceux des profilés de la technique antérieure, ce qui assure une meilleure tenue de ces pinces sur leur support.

Par ailleurs, la mise en oeuvre du procédé conforme à l'invention à t'aide d'un profilé d'une longueur précise, à partir d'un point prédéterminé de la carrosserie et d'un emplacement repéré du profilé, permet d'utiliser des profilés dont la partie formant pince à section en U peut avoir une ouverture variable suivant sa longueur et adaptée aux épaisseurs locales de son support, en différents emplacements de l'encadrement de porte.

On pourra utiliser tout type de profilé dont la longueur de l'armature ne varie pas au cours du temps, sous la sollicitation du retrait de la matière d'enrobage dont elle est gainée. A titre d'exemple, on mentionnera le profilé faisant l'objet de la demande de certificat d'addition français N° 2 626 054, c'est-à-dire un profilé comprenant une armature métallique à section transversale en U, gainée d'au moins une matière plastique ou élastomère, dans laquelle est noyé au moins un fil pratiquement inextensible dans la zone intermédiaire entre le profilé et l'élément d'étanchéité associé, dans la région de la fibre moyenne du profilé, ladite armature métallique résultant de la conformation en forme de canal en U d'une armature plane comprenant une succession de bandes parallèles de mêmes dimensions, réunies aux bandes contiguës par deux entretoises latérales disposées symétriquement par rapport au plan de symétrie du U, à l'exclusion de toute entretoise centrale disposée dans le plan de symétrie.

La présence des entretoises latérales d'une telle armature entre les bandes contiguës du profilé, conjuguée avec la présence d'un fil inextensible noyé dans la matière plastique, assure l'indéformabilité du profité au cours du temps. C'est ainsi qu'un tel profilé, d'une longueur de 3,3 mètres, fabriqué et commercialisé par la Demanderesse, conserve au cours du temps une longueur constante à ± 5 millimètres près.

Il n'est d'ailleurs pas nécessaire, dans le cadre de la présente invention, que le fil inextensible du profité ci-dessus soit situé entre le profité et l'élément d'étanchéité, et il pourrait aussi bien être disposé du coté du profilé opposé à celui où est situé l'organe d'étanchéité. On peut aussi utiliser deux fils inextensibles, disposés respectivement suivant chacune des branches du U de la section transversale du profilé.

Bien entendu, d'autres types de profilés à section en U et à armature non extensible et d'une longueur sensiblement constante dans le temps, connus ou non dans la technique, pourront être utilisés dans la mise en oeuvre de l'invention.

L'invention sera décrite ci-après de façon plus détaillée en référence aux dessins schématiques annexés qui n'ont pas de caractère limitatif. Sur ces dessins:
La figure 1 est une vue en élévation d'un encadrement de porte illustrant le montage en boucles d'un profilé en anneau de la technique antérieure;
La figure 2 est une vue analogue à la figure 1, illustrant la mise en place, selon la présente invention, en un emplacement déterminé de l'encadrement de porte, d'une partie prédéterminée du profilé en anneau;
La figure 3 illustre la phase suivante de mise en place en continu du profilé sur le rebord de l'encadrement de porte, à l'aide d'un maillet vibrant à tête souple porté par un bras articulé d'un robot programmé;
Les figures 4a et 4b sont des vues analogues aux figures 3 et 4, illustrant la position des extrémités assemblées du joint sur l'encadrement de porte, après mise en place du profilé;
La figure 5 est une vue analogue à celle de la figure 4, dans le cas d'une ouverture du coffre;
Les figures 6a et 6b sont des vues à plus grande échelle de deux types du maillet vibrant porté par le bras d'un robot, utilisé dans la mise en oeuvre de l'invention;
La figure 7 illustre un mode d'assemblage par agrafes des extrémités du profité;
La figure 8 est une vue schématique d'un profilé à section en U particulièrement bien adapté à la mise en oeuvre de l'invention;
La figure 9 représente une forme préférée d'un dispositif pour la mise en oeuvre du procédé selon l'invention, équipé d'un système de guidage du profilé.

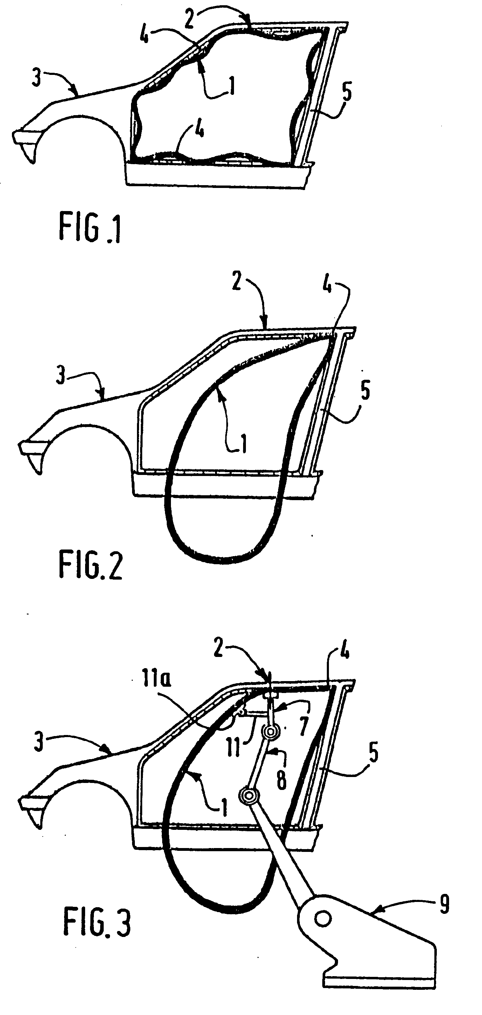

On se réfèrera d'abord à la figure 1, qui illustre le montage traditionnel "en boucles" d'un profité 1 sur un encadrement de porte 2 d'une carrosserie d'automobile 3.

Ainsi qu'il a été expliqué ci-dessus, le profilé, dont les extrémités sont assemblées pour qu'il forme un anneau et dont la longueur est supérieure à celle de l'encadrement de porte à équiper, est d'abord mis en position manuellement, en une pluralité d'emplacements 4, par pincement du rebord en saillie de l'encadrement de porte. Entre les différents points 4, le profité est ensuite fixé de force sur le même rebord à l'aide d'un maillet, ce qui a pour effet de comprimer la matière de revêtement du profité. Ces opérations sont relativement longues et coûteuses, puisqu'elles sont réalisées manuellement par un ouvrier et qu'elles utilisent une longueur de profilé supérieure à celle qui devrait être normalement nécessaire.

Conformément à l'invention (voir figures 2 et suivantes, sur lesquelles les organes déjà décrits sont désignés parles mêmes chiffres de référence), on utilise un profité 1 à section en U, disposé en anneau, dont la longueur est sensiblement égale à celle de l'encadrement de porte à équiper et dont l'armature métallique est telle qu'elle ne puisse se déformer, en s'allongeant ou en se comprimant, notamment sous la sollicitation de la matière de revêtement de cette armature, lorsque celle-ci se contracte par vieillissement et chocs thermiques après mise en place du profilé sur l'encadrement de porte.

Une partie prédéterminée et éventuellement repérée du profité 1 est mise en position, initialement, sur le rebord de l'encadrement de porte en un unique point 4 de celui-ci, qui sera avantageusement situé dans le coin supérieur de cet encadrement contigu au pied-milieu 5 de cette carrosserie. Al'aide d'un maillet 7 à tête vibrante, porté par exemple par un bras articulé 8 d'un robot 9, programmé de manière à déplacer en continu la tête du maillet 7 le long du rebord saillant à équiper, on fixe ensuite le profité 1 sur ce rebord saillant, en continu, depuis le point 4 jusqu'au point de jonction 10 des deux extrémités du profité, puis, en sens inverse, toujours à partir du point 4 jusqu'à l'autre extrémité du profité. Avantageusement, un bras 11, sur lequel est articulée une tête 11a à section en U, pourra être porté par le bras 8, de manière à la précéder dans son déplacement, la tête 11a formant guide pour amener le profité 1 en position sur son support.

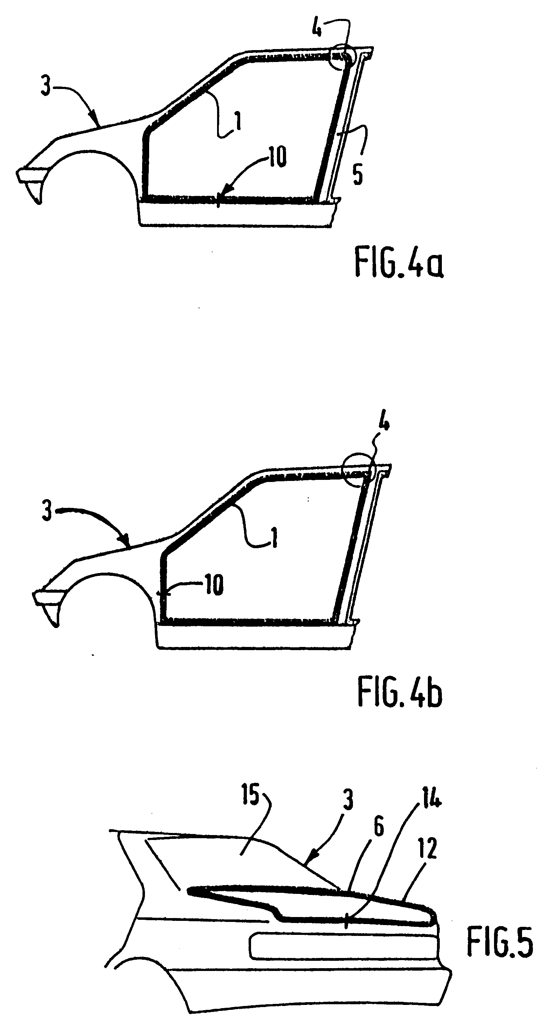

Comme on le voit sur les figures 4a et 4b, le profilé 1 peut ainsi être mis en place sur tout le pourtour de l'encadrement de porte, le point de jonction 10 des extrémités du profité étant de préférence situé, à la fin du processus de fixation du profité, soit au milieu de la partie inférieure de l'encadrement de porte (figure 4a), soit au milieu de la partie de cet encadrement disposée en regard du pied-milieu 5 (Figure 4b).

On notera qu'il n'est pas nécessaire d'imprimer dans tous les cas au maillet vibrant un mouvement en deux phases, en partant d'abord du point initial de fixation du profité sur l'encadrement de carrosserie jusqu'à une extrémité de ce profité, pour revenir ensuite au point de départ et agir ensuite sur l'autre partie du profité, en sens inverse du mouvement initial, jusqu'à l'autre extrémité du profité. En effet, avec des encadrements de carrosserie présentant un profit qui s'y prête, il est possible, en partant du point de fixation initial du profité sur l'élément saillant de carrosserie, de mettre en place le profité sur cet élément à l'aide du maillet vibrant en déplaçant ce maillet dans un unique sens, de façon qu'il effectue un trajet complet dans une seule direction pour revenir à son point de départ.

Il n'est pas nécessaire, également lorsque les extrémités du profité sont réunies pourqu'il forme un anneau, que le maillet vibrant parte du point de fixation initial du profité sur l'élément saillant de carrosserie pour s'arrêter à une extrémité du profité, mais il peut également s'arrêter en un point quelconque de l'anneau pour revenir à son point de départ et agir ensuite en sens inverse jusqu'au point où il a arrêté précédemment sa course.

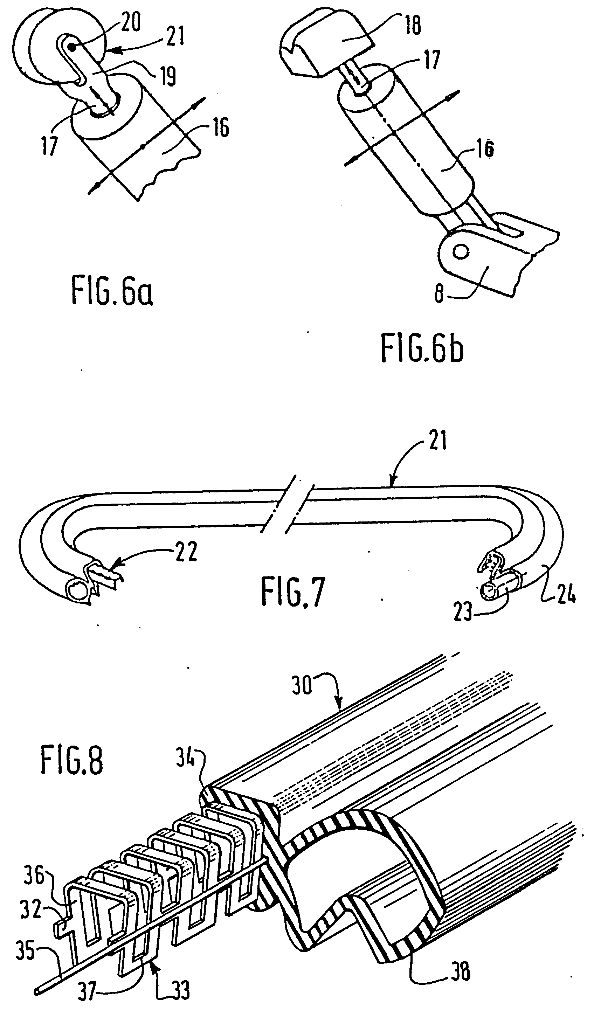

Le procédé conforme à l'invention ne s'applique pas seulement aux encadrements de porte, mais, comme indiqué ci-dessus, on peut t'utiliser avec les mêmes avantages, pour la mise en place d'un profilé 12 à section en U, attenant à un élément d'étanchéité déformable, sur le rebord saillant d'une ouverture 13 de coffre d'automobile (figure 5). Dans ce cas, le point 6 de fixation initiale d'une partie prédéterminée et eventuellement repérée du profité 12 sur le rebord saillant de l'ouverture du coffre sera situé dans l'un des angles de t'ouverture 13 te plus proche de la lunette arrière 15 du véhicule, tandis que le point de jonction 14 des extrémités du profité 12 sera de préférence situé sensiblement au milieu de la partie du rebord de l'ouverture 13 du coffre la plus éloignée de la lunette arrière 15.

Comme représenté sur la figure 6a, l'extrémité du bras du robot supporte l'élément travaillant 16 de la même manière que ceux qui, sur les robots utilisés dans t'industrie automobile, portent des pinces à soudage par points destinées à assembler les éléments de la carrosserie. Sur ta tige 17 de ce corps vibrant sera par exemple fixée une tête 18 en un matériau souple, dont la partie venant en contact avec le profilé à mettre en place aura de préférence une section en U épousant ta forme externe du profilé (figure 6a) formant pince de fixation.

Alternativement, la tige 17 se terminera par une chape 19, portant un axe 20, sur lequel sera montée libre en rotation une roue 21 en un matériau souple, dont l'arête sera échancrée en U pour épouser la forme externe du profilé à mettre en place (figure 6b).

Les extrémités du profité 1 pourront être assemblées pour former un anneau par tout moyen connu dans la technique, par exemple en engageant une agrafe de raccordement 22 à l'intérieur des extrémités contiguës et en collant ou soudant l'une contre l'autre tes sections transversales terminales de ces extrémités, par exemple à t'aide d'une colle du type cyanoacrylate (figure 7). De façon analogue, un raccord tubulaire 23 sera engagé dans les deux extrémités de t'élément d'étanchéité tubulaire 24 attenant au profité 1 et ces extrémités seront également rendues solidaires par collage ou soudage.

Pour la mise en oeuvre de l'invention, on pourra utiliser tout profité à section en U à armature métallique dont la structure est telle que sa longueur soit sensiblement constante dans le temps et qu'il ne puisse se contracter ou s'allonger, en particulier, sous la sollicitation de l'armature métallique par la matière polymère qui l'enrobe. A titre d'exemple, un tel profilé 30 décrit dans FR-A-2 626 054, est représenté sur la figure 2. Il comprend une armature métallique 33 à section transversale en U, gainée d'une matière plastique 34, dans laquelle est disposé au moins un fil pratiquement inextensible 35. L'armature métallique 33 résulte de la conformation en forme de canal en U d'une armature plane comprenant une succession d'éléments rectangulaires ajourés présentant des grands côtés 36 perpendiculaires au plan de symétrie du U et des petits côtés 37 parallèles à ce plan de symétrie, les éléments rectangulaires étant réunis aux éléments contigus par deux entretoises 32 parallèles au plan de symétrie du U. Une telle armature ne peut être ni allongée, ni comprimée, et le fil inextensible 35 noyé dans ta matière de revêtement, s'oppose à la contraction de celle-ci. Comme représenté, le fil 35 peut être disposé dans la zone intermédiaire entre le profité et l'élément d'étanchéité 38 associé, mais il pourrait aussi bien être noyé dans la matière plastique enrobant ta branche du U non contiguë à l'élément d'étanchéité 38, ou la base du U. On peut également utiliser plus d'un fil inextensible 35 et associer ainsi un tel fil à chacune des branches du U.

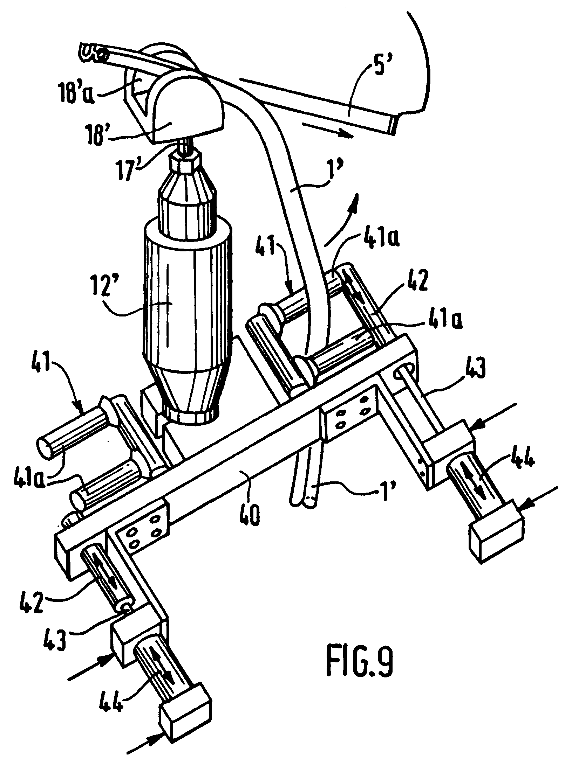

On va décrire maintenant, en référence à la figure 9, une forme préférée de réalisation d'un dispositif pour la mise en oeuvre du procédé selon l'invention.

Sur cette figure, les organes déjà décrits ci-dessus sont désignés par les mêmes chiffres de référence affectés de l'indice'.

On y retrouve un profilé 1' destiné à être mis en place sur un élément saillant d'un encadrement de porte de véhicule, au niveau du pied milieu 5' de la carrosserie. La tête vibrante 18' en un matériau souple du maillet est portée par ta tige 17' d'un corps vibrant 12' et elle présente un évidement 18a' pour coiffer le profilé.

L'ossature rigide 40 portant le corps vibrant 12', supporte, disposés symétriquement de part et d'autre de ce corps 12', deux éléments de guidage 41 du profité, ayant un profit en U, dont les sommets des branches 41a peuvent être réunis par un organe de fermeture mobile 42, porté par la tige 43 d'un vérin 44, hydraulique ou pneumatique.

Le profité 1 est engagé entre les branches 41a de l'élément 41 de guidage le plus approprié, en vue de suivre fidèlement les mouvements de la tête 18' du maillet et d'être amené en alignement avec l'évidement 18'a de cette tête. Lorsque la position de la tête 18' l'exige, le robot déverrouille l'élément de fermeture 42 de cet élément de guidage 41, en extrait le profilé 1 et engage celui-ci dans te second élément de guidage 41, qu'il verrouille ensuite à l'aide du second élément de fermeture 42.

Bien entendu, le procédé de l'invention s'applique à la mise en place sur un rebord saillant d'une carrosserie d'automobile de tout autre profilé à section en U A armature métallique dont la longueur demeure sensiblement invariable au cours du temps.

## Revendications

1. Procédé de mise en place, sur un rebord saillant d'un encadrement d'une carrosserie d'automobile, d'un profilé (1) à section en U comprenant une armature métallique sensiblement non extensible, gainée d'une matière résiliente, cette armature étant sensiblement non déformable dans le temps sous la sollicitation de la matière de revêtement, procédé selon lequel on fixe initialement en position, en un emplacement prédéterminé (4) du rebord de cet encadrement, éventuellement repéré, une partie prédéterminée et éventuellement repérée du profilé, puis, à l'aide d'un outil, on applique en continu le profilé contre le rebord de l'encadrement de carrosserie à partir dudit emplacement prédéterminé (4) jusqu'à une première extrémité du profilé et, toujours à partir dudit emplacement prédéterminé, jusqu'à l'autre extrémité du profilé, ce procédé étant caractérisé en ce que le profilé (1) a une longueur sensiblement égale à celle de l'encadrement (2) de carrosserie à équiper et en ce que l'outil utilisé est un maillet vibrant (7) à tête souple, animée d'un mouvement alternatif de percussion, fixé sur la tige d'un porte-outil vibrant (12', 16).

2. Procédé de mise en place, sur un rebord saillant d'un encadrement d'une carrosserie d'automobile, d'un profilé (1) à section en U comprenant une armature métallique sensiblement non extensible, gainée d'une matière résiliente, cette armature étant sensiblement non déformable dans le temps sous la sollicitation de la matière de revêtement, les deux extrémités du profilé (1) étant solidaires l'une de l'autre de manière qu'il forme un anneau, procédé selon lequel on fixe initialement en position en un emplacement prédéterminé (4) du rebord de l'encadrement de carrosserie, éventuellement repéré, une partie prédéterminée et éventuellement repérée du profilé, puis, à l'aide d'un outil, on applique en continu le profilé contre le rebord de l'encadrement de carrosserie à partir dudit emplacement prédéterminé (4) jusqu'à un second emplacement de cet encadrement, l'outil revenant ensuite à sa position initiale audit emplacement prédéterminé (4) du rebord de l'élément de carrosserie, pour fixer sur le rebord d'encadrement (2) la partie dudit profilé qui n'en était pas encore solidaire, depuis ledit emplacement déterminé (4) jusqu'au dit second emplacement de cet élément, ce procédé étant caractérisé en ce que le profilé (1) a une longueur sensiblement égale à celle de l'encadrement (2) de carrosserie à équiper et en ce que l'on utilise comme outil un maillet vibrant (7) à tête souple, animée d'un mouvement alternatif de percussion, fixé sur la tige d'un porte-outil vibrant (12', 16).

3. Procédé de mise en place, sur un rebord saillant d'un encadrement d'une carrosserie d'automobile, d'un profilé (1) à section en U comprenant une armature métallique sensiblement non extensible, gainée d'une matière résiliente, cette armature étant sensiblement non déformable dans le temps sous la sollicitation de la matière de revêtement, les deux extrémités du profilé (1) étant solidaires l'une de l'autre de manière qu'il forme un anneau, procédé selon lequel on fixe initialement en position en un emplacement prédéterminé (4) du rebord de l'encadrement de carrosserie, éventuellement repéré, une partie prédéterminée et éventuellement repérée du profilé, puis, à l'aide d'un outil, on applique en continu le profilé contre le rebord de l'encadrement de carrosserie à partir dudit emplacement prédéterminé (4), en imprimant à l'outil un trajet continu suivant toute la longueur du rebord de l'encadrement de carrosserie, jusqu'à ce qu'il revienne à son point de départ, ce procédé étant caractérisé en ce que le profilé (1) a une longueur sensiblement égale à celle de l'encadrement (2) de carrosserie à équiper et en ce que l'on utilise comme outil un maillet vibrant (7) à tête souple, animée d'un mouvement alternatif de percussion, fixé sur la tige d'un porte-outil vibrant (12', 16).

4. Procédé selon l'une des revendications 1 à 3, caractérisé en ce que la mise en place d'une partie prédéterminée du profilé (1) en un emplacement prédéterminé(4) de l'élément de carrosserie est réalisée manuellement à l'aide d'un outil distinct du maillet à tête vibrante.

5. Procédé selon la revendication 1 à 3, caractérisé en ce que la mise en place d'une partie prédéterminée du profilé en un emplacement prédéterminé de l'encadrement de carrosserie est réalisé à l'aide du maillet (7) à tête vibrante.

6. Procédé selon l'une des revendications 1 à 5, appliqué à la mise en place d'un profilé à section en U sur te rebord saillant d'un encadrement (2) de porte d'automobile, caractérisé en ce que le dit emplacement prédéterminé (4) de l'élément de carrosserie est situé dans l'angle supérieur de l'encadrement contigu au pied-milieu correspondant (5) de la carrosserie.

7. Procédé selon l'une des revendications 1 à 6, appliqué à la mise en place d'un profilé à section en U sur le rebord saillant d'une ouverture (13) de coffre d'automobile, caractérisé en ce que ledit emplacement prédéterminé (6) de l'élément de carrosserie est situé dans l'un ou l'autre des angles de l'ouverture les plus proches de la lunette arrière (13) du véhicule.

8. Procédé selon l'une des revendications 2 à 7, appliqué à la mise en place d'un profilé à section en U sur le rebord saillant d'un encadrement (2) de porte d'automobile, caractérisé en ce qu'en fin de montage, le point de jonction (10) des deux extrémités du profilé est situé à la base de l'encadrement de porte, de préférence dans la partie médiane de cette base, ou dans la partie de cet encadrement disposée en regard du pied-milieu (5).

9. Procédé selon l'une des revendications 2 à 7, appliqué à la mise en place d'un profilé en U sur le rebord saillant d'une ouverture (13) de coffre d'automobile, caractérisé en ce qu'en fin de montage, le point de jonction (14) des deux extrémités du profilé est situé sur l'arête de l'ouverture disposée à l'arrière du véhicule, de préférence dans la partie médiane de cette arête.

10. Procédé automatisé selon l'une des revendications 1 à 8, caractérisé en ce que ledit maillet vibrant (7) à tête souple est porté par un bras (8) d'un robot programmé (9).

11. Procédé selon l'une des revendications 1 à 10, caractérisé en ce que ledit maillet vibrant comporte une tête souple (18) conformée en U, apte à épouser la forme externe du profilé.

12. Procédé selon l'une des revendications 1 à 9, caractérisé en ce que ledit maillet vibrant comporte une tête constituée d'une roulette souple (21), dont la tranche évidée en U est apte à épouser la forme externe du profilé.

13. Procédé selon l'une des revendications 1 à 12, appliqué à la mise en place, sur un rebord saillant d'un élément de carrosserie d'automobile, d'un joint d'étanchéité comprenant un profilé à section en U et un organe d'étanchéité déformable solidaire d'une branche du U, caractérisé en ce que, de façon connue en soi, ledit profilé comprend une armature métallique (33) à section transversale en U gainée d'au moins une matière plastique (34) dans laquelle est noyé au moins un fil pratiquement inextensible (35) disposé parallèlement au plan de symétrie de l'armature du U, cette armature résultant de la conformation en forme de canal en U d'une armature plane comprenant une succession de bandes parallèles de mêmes dimensions, réunies aux bandes contiguës par deux entretoises latérales disposées symétriquement par rapport au plan de symétrie du U, à l'exclusion de toute entretoise centrale disposée dans le plan de symétrie.

14. Dispositif pour la mise en place, sur un rebord saillant d'un encadrement de carrosserie d'automobile, d'un profilé (1) à section en U comprenant une armature métallique gainée d'une matière résiliente, caractérisé en ce qu'il comprend un maillet (7) à tête souple fixé sur la tige d'un porte-outil vibrant (12', 16), pour imprimer à la tête de ce maillet un mouvement alternatif de percussion.

15. Dispositif selon la revendication 14, caractérisé en ce que la partie de la tête souple (18) dudit maillet destinée à prendre appui contre le profilé à section en U comporte un évidement à section en U apte à épouser la forme externe du profilé.

16. Dispositif selon la revendication 15, caractérisé en ce que ladite tête souple est constituée par une roulette (21) dont la tranche est évidée en U.

17. Dispositif selon l'une des revendications 13 à 16, caractérisé en ce que le maillet à tête souple (18'), ou une structure (40) portant celui-ci, comporte au moins un élément (41) de guidage du profile, apte à amener le profilé en alignement avec la partie de ta tête souple du maillet vibrant qui agit sur le profilé.

18. Dispositif selon la revendication 17, caractérisé en ce que l'élément de guidage (41) a un profil en U, dont tes branches (41a) sont réunies par un organe amovible de fermeture (42) tel qu'une goupille.

19. Dispositif selon l'une des revendications 13 à 18, caractérisé en ce que ledit maillet est porté par un bras (8, 8') d'un robot programmé (9, 9').

## Claims

1. A process for positioning a profile member (1) of U-shaped section on a projecting edge of a car body frame, the profile member comprising a substantially non-extensible metal armature which is encased by a resilient material, the armature being substantially non-deformable over the passage of time when subjected to the pull of the covering material, in which process a selected part, possibly marked out, of the profile member is initially fixed in position at a preselected location (4), possibly marked out on the edge of the frame, and then a tool is used to continuously apply the profile member to the edge of the frame of the body, starting from said preselected location (4) up to a first end of the profile member, and also from said preselected location to the other end of the profile member, this process being characterised in that the profile member (1) is substantially equal in length to the frame (2) of the body to be fitted out, and in that the tool used is a vibrating mallet (7) with a flexible head which performs an alternating striking movement and which is fixed to the rod of a vibrating tool carrier (12', 16).

2. A process for positioning a profile member (1) of U-shaped section on a projecting edge of a frame of a car body, the profile member comprising a substantially non-extensible metal armature encased by a resilient material, the armature being substantially non-deformable over the passage of time when subjected to the pull of the covering material, the two ends of the profile member (1) being fixed together in such a way that a ring is formed, in which process a preselected part, possibly marked out, of the profile member is initially fixed in position at a preselected location (4), possibly marked out, on the edge of the frame of the body, and then a tool is used to continuously apply the profile member to the edge of the frame of the body, starting from said preselected location (4) up to a second location on the frame, the tool then returning to its initial position at said preselected location (4) on the edge of the body element, in order to fix to the edge of the frame (2) the part of said profile member which is not yet integral with it, from said preselected location (4) to said second location of this element, the process being characterised in that the profile member (1) is substantially equal in length to the frame (2) of the body to be equipped, and in that the tool used is a vibrating mallet (7) with a flexible head which performs alternating striking movements and which is fixed to the rod of a vibrating tool carrier (12', 16).

3. A process for positioning a profile member (1) of U-shaped section on a projecting edge of a frame of a car body, the profile member comprising s substantially non-extensible metal armature which is encased by a resilient material, the armature being substantially non-deformable over the passage of time when subjected to the pull of the covering material, the two ends of the profile member (1) being fixed to each other in such a way that a ring is formed, in which process a preselected part, possibly marked out, of the profile member is initially fixed in position at a preselected location (4), possibly marked out, on the edge of the frame of the body, and then a tool is used to continuously apply the profile member to the edge of the frame of the body, starting from said preselected location (4), the tool following a continuous path along the entire length of the edge of the frame of the body until it returns to its starting point, the process being characterised in that the profile member (1) is substantially equal in length to the frame (2) of the body to be fitted out, and that the tool used is a vibrating mallet (7) with a flexible head which performs alternating striking movements, and which is fixed to the rod of a vibrating tool-carrier (12', 16).

4. A process according to one of Claims 1 to 3, characterised in that a preselected part of the profile member (1) is positioned at a preselected location (4) on the body element manually by the use of a separate tool from the mallet with vibrating head.

5. A process according to Claims 1 to 3, characterised in that a preselected part of the profile member is placed at a preselected location on the frame of the body by the use of a mallet (7) with a vibrating head.

6. A process according to one of Claims 1 to 5, used to position a profile member of U-shaped section on the projecting edge of a frame (2) of a car door, characterised in that said preselected location (4) of the body element is disposed in the upper corner of the frame which is contiguous with the corresponding central support (5) of the body.

7. A process according to one of Claims 1 to 6, used to position a profile member of U-shaped section on the projecting edge of an opening (13) of the boot of a car, characterised in that said preselected location (6) of the body element is disposed in one or other of the corners of the opening closest to the rear window (13) of the vehicle.

8. A process according to one of Claims 2 to 7, used for the positioning of a profile member of U-shaped section on the projecting edge of a frame (2) of a car door, characterised in that at the end of the assembly operation, the meeting point (10) of the two ends of the profile member is disposed at the bottom of the door frame, preferably in the central part of the bottom or in the part of the frame disposed opposite the central support (5).

9. A process according to one of Claims 2 to 7, used for the positioning of a U-shaped profile member on the projecting edge of an opening (13) of a car boot, characterised in that at the end of the assembly operation, the meeting point (14) of the two ends of the profile member is at the edge of the opening, to the rear of the vehicle, preferably in the central part of that edge.

10. An automated process according to any one of Claims 1 to 8, characterised in that said vibrating mallet (7) with flexible head is carried by an arm (8) of a programmed robot (9).

11. A process according to one of Claims 1 to 10, characterised in that said vibrating mallet comprises a flexible U-shaped head (18) capable of marrying the external shape of the profile member.

12. A process according to one of Claims 1 to 9, characterised in that said vibrating mallet comprises a head constituted by a flexible roller (21), the edge of which, recessed in a U-shaped configuration, is capable of marrying the external shape of the profile member.

13. A process according to one of Claims 1 to 12, used to position a sealing joint on a projecting edge of a car body element, which sealing joint has a profile of U-shaped section and a deformable sealing member which is integral with a U-shaped limb, characterised in that, in per se known manner, said profile member comprises a metal armature (33) of U-shaped cross-section which is encased by at least one plastics material (34) in which at least one substantially non-extensible wire (35) is embedded which is arranged parallel to the plane of symmetry of the U-shaped armature, this armature resulting from the configuration of a U-shaped passage of a flat armature comprising a series of parallel strips of the same size which are joined to the contiguous strips by way of two lateral crosspieces disposed symmetrically with respect to the plane of symmetry of the U-shape, excluding any central crosspieces disposed in the plane of symmetry.

14. A device for positioning a profile member (1) of U-shaped section on a projecting edge of a frame of a car body, which profile member comprises a metal armature encased by a resilient material, characterised in that it comprises a mallet (7) with flexible head on the rod of a vibrating tool holder (12', 16), for imparting an alternating striking movement upon the head of the mallet.

15. A device according to Claim 14, characterised in that the part of the flexible head (18) of said mallet intended to bear against the profile member of U-shaped section comprises a recess of U-shaped section capable of marrying the external shape of the profile member.

16. A device according to Claim 15, characterised in that said flexible head is constituted by a roller (21), the edge of which is recessed in a U-shaped configuration.

17. A device according to one of Claims 13 to 16, characterised in that the mallet with flexible head (18'), or a structure (40) carrying it, comprises at least one element (41) for guiding the profile member, capable of bringing the profile member into alignment with the part of the flexible head of the vibrating mallet which acts upon the profile member.

18. A device according to Claim 17, characterised in that the guide element (41) has a U-shaped profile, the limbs (41a) of which are joined by a removable closure member (42) such as a pin.

19. A device according to one of Claims 13 to 18, characterised in that said mallet is carried by an arm (8, 8') of a programmed robot (9, 9').

## Patentansprüche

1. Verfahren zur Anbringung eines Profilelements (1) von U-förmigem Querschnitt auf einem vorspringenden Rand einer Umrahmung einer Kraftfahrzeugkarosserie, das eine im wesentlichen undehnbare metallische Armierung aufweist, die von elastischem Material umschlossen ist und die bei der Beanspruchung des Überzugsmaterials im wesentlichen unverformbar ist, wobei zunächst ein vorbestimmter und gegebenenfalls markierter Teil des Profilelements an einer vorbestimmten und gegebenenfalls markierten Stelle (4) des Randes der Umrahmung befestigt und anschließend mittels eines Werkzeugs das Profilelement ausgehend von der vorbestimmten Stelle (4) an dem Rand der Umrahmung der Karosserie bis zu einem ersten freien Ende des Profilelements und weiter ausgehend von der vorbestimmten Stelle bis zum anderen freien Ende des Profilelements durchgehend angebracht wird, wobei dieses Verfahren dadurch gekennzeichnet ist, daß das Profilelement (1) eine Länge aufweist, die im wesentlichen gleich der der Umrahmung (2) der auszurüstenden Karosserie ist, und daß das verwendete Werkzeug ein Schwinghammer (7) mit einem weichen Kopf ist, der in eine hin- und hergehende Schlagbewegung versetzt wird, der auf dem Schaft eines vibrierenden Werkzeughalters (12', 16) befestigt ist.

2. Verfahren zur Anbringung eines Profilelements (1) von U-förmigem Querschnitt auf einem vorspringenden Rand einer Umrahmung einer Kraftfahrzeugkarosserie, das eine im wesentlichen undehnbare metallische Armierung aufweist, die von elastischem Material umschlossen ist und die bei der Beanspruchung des Überzugsmaterials im wesentlichen unverformbar ist, wobei die beiden Enden des Profilelements (1) so kraftschlüssig miteinander verbunden sind, daß sie einen Ring bilden, wobei zunächst ein vorbestimmter und gegebenenfalls markierter Teil des Profilelements an einer vorbestimmten und gegebenenfalls markierten Stelle (4) des Randes der Umrahmung der Karosserie befestigt und anschließend mittels eines Werkzeugs das Profilelement ausgehend von der vorbestimmten Stelle (4) an dem Rand der Umrahmung der Karosserie bis zu einer zweiten Stelle der Umrahmung durchgehend angebracht wird, das Werkzeug dann in seine Ausgangsstellung an der vorbestimmten Stelle (4) des Randes des Elements der Karosserie zurückgeht, um den noch nicht kraftschlüssig verbundenen Abschnitt des Profilelements auf dem Rand der Umrahmung (2) von der vorbestimmten Stelle (4) bis zu der zweiten Stelle dieses Elements zu befestigen, wobei dieses Verfahren dadurch gekennzeichnet ist, daß das Profilelement (1) eine Länge aufweist, die im wesentlichen gleich der der Umrahmung (2) der auszurüstenden Karosserie ist und daß als Werkzeug ein Schwinghammer (7) mit einem weichen Kopf verwendet wird, der in eine hin- und hergehende Schlagbewegung versetzt wird, der auf dem Schaft eines vibrierenden Werkzeughalters (12', 16) befestigt ist.

3. Verfahren zur Anbringung eines Profilelements (1) von U-förmigem Querschnitt auf einem vorspringenden Rand einer Umrahmung einer Kraftfahrzeugkarosserie, das eine im wesentlichen undehnbare metallische Armierung aufweist, die von elastischem Material umschlossen ist und die bei der Beanspruchung des Überzugsmaterials im wesentlichen unverformbar ist, wobei die beiden Enden des Profilelements (1) so kraftschlüssig miteinander verbunden sind, daß sie einen Ring bilden, wobei zunächst ein vorbestimmter und gegebenenfalls markierter Teil des Profilelements an einer vorbestimmten und gegebenenfalls markierten Stelle (4) des Randes der Umrahmung der Karosserie befestigt und anschließend mittels eines Werkzeugs das Profilelement ausgehend von der vorbestimmten Stelle (4) an dem Rand der Umrahmung der Karosserie bis zu seiner Ausgangsstellung durchgehend angebracht wird, indem das Werkzeug auf einer durchgehenden Bahn geführt wird, die der gesamten Länge des Randes der Umrahmung der Karosserie folgt, wobei dieses Verfahren dadurch gekennzeichnet ist, daß das Profilelement (1) eine Länge aufweist, die im wesentlichen gleich der der Umrahmung (2) der auszurüstenden Karosserie ist und daß als Werkzeug ein Schwinghammer (7) mit einem weichen Kopf verwendet wird, der in eine hin- und hergehende Schlagbewegung versetzt wird, der auf dem Schaft eines vibrierenden Werkzeughalters (12', 16) befestigt ist.

4. Verfahren nach einem der Ansprüche 1 bis 3, dadurch gekennzeichnet, daß der vorbestimmte Teil des Profilelements (1) an einer vorbestimmten Stelle (4) des Teils der Karosserie von Hand mittels eines anderen Werkzeugs als dem Schwinghammer angebracht wird.

5. Verfahren nach einem der Ansprüche 1 bis 3, dadurch gekennzeichnet, daß der vorbestimmte Teil des Profilelements an einer vorbestimmten Stelle der Umrahmung der Öffnung der Karosserie mittels eines Hammers (7) mit einem Schwingkopf angebracht wird.

6. Verfahren nach einem der Ansprüche 1 bis 5, zur Anbringung eines Profilelements von U-förmigem Querschnitt an dem vorspringenden Rand einer Umrahmung (2) einer Kraftfahrzeugtür, dadurch gekennzeichnet, daß die vorbestimmte Stelle (4) der Umrahmung der Öffnung der Karosserie in der oberen Ecke der Umrahmung im Bereich des Mittelholms (5) der Karosserie angeorgnet wird.

7. Verfahren nach einem der Ansprüche 1 bis 6, zur Anordnung eines Profilelements von U-förmigem Querschnitt an dem vorspringenden Rand einer Öffnung (13) des Kofferraums, dadurch gekennzeichnet, daß die vorbestimmte Stelle (6) des Teils der Karosserie in der einen oder anderen Ecke der Öffnung in der Nähe des Heckfensters (13) des Fahrzeugs angeordnet wird.

8. Verfahren nach einem der Ansprüche 2 bis 7, zur Anbringung eines Profilelements von U-förmigen Querschnitt an dem vorspringenden Rand einer Umrahmung (2) einer Kraftfahrzeugtur, dadurch gekennzeichnet, daß nach der Montage die Stoßstelle (10) der beiden freien Enden des Profilelements am unteren Rand der Umrahmung der Tür vorzugsweise in der Mitte, oder im Bereich des Mittelholms an der Umrahmung angeordnet ist.

9. Verfahren nach einem der Ansprüche 2 bis 7, zur Anbringung eines Profilelements von U-förmigen Querschnitt an dem vorspringenden Rand einer Kofferraumöffnung (13), dadurch gekennzeichnet, daß nach der Montage die Stoßstelle (14) der beiden freien Enden des Profilelements an der Kante der Öffnung am Heck des Fahrzeugs, vorzugsweise in der Mitte der Kante, angeordnet ist.

10. Selbsttätig arbeitendes Verfahren nach einem der Ansprüche 1 bis 8, dadurch gekennzeichnet, daß der einen weichen Kopf aufweisende Schwinghammer (7) an einem Arm (8) eines computergesteuerten Roboters (9) angeordnet ist.

11. Verfahren nach einem der Ansprüche 1 bis 10, dadurch gekennzeichnet, daß der Schwinghammer einen weichen Kopf (18) aufweist, der zur Anlage an dem Umfang des Profilelements U-förmig ausgebildet ist.

12. Verfahren nach einem der Ansprüche 1 bis 9, dadurch gekennzeichnet, daß der Schwinghammer einen Kopf in Form einer weichen Rolle (21) trägt, deren U-förmige Kerbe zur Anlage an dem Umfang des Profilelements ausgebildet ist.

13. Verfahren nach einem der Ansprüche 1 bis 12, zur Anbringung eines Dichtungsbands an dem vorspringenden Rand eines Teils einer Kraftfahrzeugkarosserie aus einem Profilelement von U-förmigem Querschnitt und einem verformbaren Dichtungselement an einem Schenkel des U-Profils, dadurch gekennzeichnet, daß das Profilelement in an sich bekannter Weise eine Metallarmierung (33) von U-förmigem Querschnitt aufweist, die mindestens teilweise von Kunststoffmaterial (34) umschlossen ist, in das ein im wesentlichen undehnbarer Faden (35) parallel zu der Symmetrieebene der U-förmigen Armierung eingebettet ist, wobei die Armierung aus einem ebenen Zuschnitt zu einem U-förmigen Kanal geformt ist, der eine Reihe von parallelen Streifen gleicher Abmessungen aufweist, die durch zwei seitliche Stege miteinander verbunden sind, die symmetrisch zur Symmetrieebene des U-Querschnitts unter Freilassung von zentralen Räumen, die in der Symmetrieebene vorgesehen sind, angeordnet sind.

14. Vorrichtung zur Anbringung eines Profilelements (1) von U-förmigem Querschnitt auf einem vorspringenden Rand einer Umrahmung einer Kraftfahrzeugkarosserie mit einer von elastischem Material umschlossenen Metallarmierung, dadurch gekennzeichnet, daß diese einen Hammer (7) mit einem weichen Kopf aufweist, der auf dem Schaft eines Werkzeughalters (12', 16) befestigt ist, um den Kopf dieses Hammers in eine hin- und hergehende Schlagbewegung zu versetzen.

15. Vorrichtung nach Anspruch 14, dadurch gekennzeichnet, daß der Teil des weichen Kopfes (18) des für die Anlage an dem Profilelement von U-förmigem Querschnitt ausgebildeten Hammers (7) eine Kerbe von U-förmigem Querschnitt aufweist, die zur Anlage an dem Umfang des Profilelements ausgebildet ist.

16. Vorrichtung nach Anspruch 15, dadurch gekennzeichnet, daß der weiche Kopf aus einer Rolle (21) mit einer U-förmigen Kerbe besteht.

17. Vorrichtung nach einem der Ansprüche 13 bis 16, dadurch gekennzeichnet, daß der Hammer mit dem weichen Kopf (18') oder ein Rahmen (40) des Hammers mindestens ein Element (41) zur Fuhrung des Profilelements aufweist, das das Profilelement mit dem Teil des weichen Kopfes des Schwinghammers ausrichtet, der auf das Profilelement wirksam ist.

18. Vorrichtung Anspruch 17, dadurch gekennzeichnet, daß das Führungselement (41) U-förmig ist, dessen Schenkel (41a) durch ein Stellorgan (42) nach Art eines Stegs miteinander verbunden sind.

19. Vorrichtung nach einem der Ansprüche 13 bis 18, dadurch gekennzeichnet, daß der Hammer an einem Arm (8, 8') eines programmierbaren Roboters (9, 9') angeordnet ist.
